# EUROPÄISCHE PATENTSCHRIFT

(11) **EP 0 596 832 B1**
(45) Veröffentlichungstag und Bekanntmachung des Hinweises auf die Patenterteilung: **08.07.1998**
(21) Anmeldenummer: 93810748.9
(22) Anmeldetag: 25.10.1993
(51) Int. Cl.: B23D 59/00, B23Q 11/00

(54) **Vertikale Plattensäge**
Vertical panel saw
Sciège des panneaux verticale

(30) Priorität: 04.11.1992 CH 3421/92
(43) Veröffentlichungstag der Anmeldung: 11.05.1994
(73) Patentinhaber: Striebig AG, CH-6014 Littau (CH)
(72) Erfinder: Striebig, Ludwig, CH-6005 Luzern (CH)
(74) Vertreter: Zimmermann, Hans, Dr.

(56) Entgegenhaltungen:
- EP-A- 0 244 358
- DD-A- 122 216
- GB-A- 2 139 556

## Beschreibung

Die Erfindung betrifft eine vertikale Plattensäge gemäss dem Oberbegriff des unabhängigen Patentanspruchs.

Derartige vertikale Plattensägen unterliegen sehr strengen Vorschriften hinsichtlich der Absaugung des im Betrieb unvermeidbar anfallenden Holzstaubes. Es wurden zwar bereits erhebliche Anstrengungen unternommen, um den vor und hinter dem Werkstück vom Sägeblatt abgeschleuderten Holzstaub abzufangen und abzuleiten, doch ergeben sich bei Verwendung der bekannten Vorrichtungen immer noch Grenzsituationen, in denen geringe Holzstaubmengen in den Arbeitsraum und damit in den Atmungsbereich des Personals gelangen.

Aus der EP-A-0 244 358 ist eine vertikale Plattensäge der eingangs beschriebenen Art bekannt, bei der die Abschlusswand direkt am Stützrost ortsfest verankert ist und die der Werkstückauflageseite abgewandte Rückseite des Stützrostes durchgängig schliesst, so dass horizontale Kanäle gebildet werden, die durch paarweise benachbarte Rostleisten, die Abschlusswand und während des Sägens durch das aufgelegte Werkstück begrenzt sind. Der vom Sägeblatt tangential abgeschleuderte Holzstaub gelangt über einen horizontalen Kanal in einen am Rand der Plattensäge angeordneten vertikalen Absaugschacht und wird dort durch die kombinierte Wirkung von Schwerkraft und Absaugung nach unten entfernt.

Diese vertikale Plattensäge weist aber den Nachteil auf, dass der Holzstaub zuerst horizontal in einem geschlossenen Kanal transportiert werden muss, was es erforderlich macht, das Werkstück angrenzend an den Absaugschacht auf den Stützrost aufzulegen oder zwischen dem Absaugschacht und dem Rand des Werkstücks die Werkstückauflageseite des Stützrostes mit einer Abdichtwand zu verschliessen. Da die horizontalen Kanäle geschlossen sein müssen, dürfen die Rostleisten auch nicht mit durchgängigen vertikalen Aussparungen versehen sein, so dass Vertikalschnitte nur am Rande des Stützrostes durchgeführt werden können.

Es ist daher die Aufgabe der vorliegenden Erfindung, eine vertikale Plattensäge der eingangs beschriebenen Art vorzuschlagen, welche den vor und hinter dem Werkstück anfallenden, vom Sägeblatt abgeschleuderten Holzstaub bis auf einen minimalen, eindeutig unter der gesetzlich begrenzten Mindestmenge liegenden Restwert mit Sicherheit abzusagen gestattet, die oben erwähnten Nachteile der aus der EP-A-0 244 358 bekannten Plattensäge nicht aufweist und ferner eine Verbesserung hinsichtlich Reduzierung des Verletzungsrisikos mit sich bringt.

Diese Aufgabe wird gelöst durch die im kennzeichnenden Teil des unabhängigen Patentanspruchs definierte Erfindung. Bevorzugte Ausführungsbeispiele ergeben sich aus den abhängigen Patentansprüchen.

Nachstehend wird anhand der beiliegenden Zeichnungen ein Ausführungsbeispiel der erfindungsgemässen Plattensäge beschrieben. Es zeigen:
Fig. 1 eine vereinfachte Frontansicht einer Ausführungsform einer vertikalen Plattensäge gemäss der vorliegenden Erfindung,
Fig. 1a ein Detail im rechten Randbereich der Plattensäge,
Fig. 2 eine Seitenansicht derselben,
Fig. 3 eine perspektivische Detailansicht im Arbeitsbereich des Sägeaggregates und
Fig. 4 eine Möglichkeit der Ausbildung des Stützrostes.

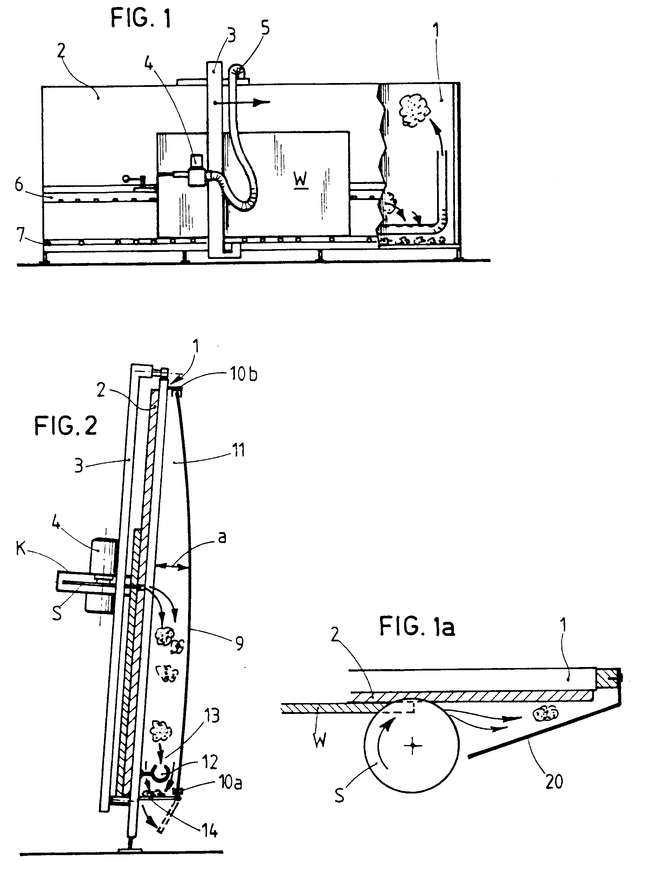

Die vereinfachte Darstellung nach Fig. 1 zeigt eine vertikale Plattensäge mit einem praktisch vertikalen, das heisst, leicht geneigten Gestell 1 und einem Stützrost 2, der in bekannter Weise am Gestell in Abhängigkeit von der jeweiligen Höhenlage des in Horizontalschnittposition befindlichen Sägeaggregats vertikal verschiebbar gelagert ist, um dadurch zu gewährleisten, dass das Sägeblatt beim Horizontalschnitt stets zwischen zwei benachbarte Stützrostleisten zu liegen kommt. Ein längs des Gestells 1 verschiebbarer Sägebalken 3 trägt das um 90° kippbar gelagerte Sägeaggregat 4, das über eine Absaugeleitung 5 an eine nicht gezeigte Vakuumquelle angeschlossen ist. Die Absaugeleitung 5 mündet in eine praktisch sägestaubdicht geschlossene Kammer K, die das Sägeblatt S umschliesst. Am Gestell 1 sind ferner horizontale Werkstücksupporte 6 und 7 befestigt, auf welche sich das zu zersägende Werkstück mit seinem unteren Rand abstützt.

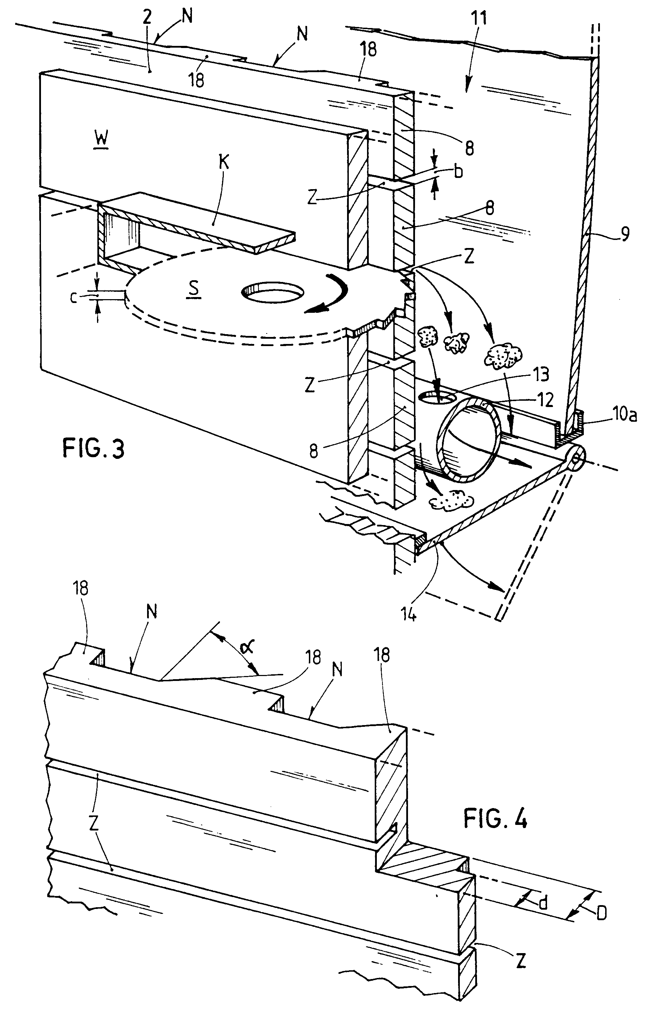

Der Stützrost 2, dessen Struktur sich aus der perspektivischen Detaildarstellung nach Fig. 4 ergibt, weist eine Vielzahl horizontaler Leisten 8 (Fig. 3) auf, deren Zwischenräume Z als schmale Schlitze ausgebildet sind. Die Höhe b dieser Schlitze entspricht im wesentlichen der Sägeblattdicke c (Fig. 3), so dass das Sägeblatt S zwar ungehindert und berührungsfrei in den betreffenden Schlitz Z eindringen kann, dass aber innerhalb des Schlitzes ober- und unterhalb des Sägeblattes S kein nennenswerter Austrittsspalt für den vom Sägeblatt abgeschleuderten Holzstaub verbleibt.

Am Gestell 1 ist ferner an dessen dem Stützrost 2 abgewandter Seite eine Abschlusswand 9 so zwischen einem unteren U-Profil 10a und einem oberen U-Profil 10b eingespannt, dass sie - wie Fig. 3 zeigt - eine leichte Bombierung aufweist. Diese Abschlusswand 9 erstreckt sich praktisch über die gesamte rückseitige Flache der Plattensäge und umgrenzt mit dem Stützrost 2 einen Absaugeraum 11 (Fig. 2), in dessen unterem Abschnitt ein sich über die Gesamtlänge des Absaugeraums 11 erstreckendes Absaugerohr 12 angeordnet ist. Das mit Eintrittsöffnungen 13 versehene Absaugerohr 12 ist an eine nicht gezeigte Vakuumquelle angeschlossen.

Im Betrieb der Plattensäge, das heisst, bei Durchführung eines Horizontalschnittes an einem Werkstück W dringt das Sägeblatt S durch das Werkstück in einen der Stützrostschlitze Z, wobei der anfallende Sägestaub in den Zwischenraum zwischen Stützrost 2 und Werkstück W gelangt und dort in bekannter Weise abgesaugt wird (vgl. hierzu beispielsweise EP-A-0 561 742). Der durch den Stützrostschlitz Z in den Absaugeraum 11 gelangende Holzstaub fällt dort nach unten und wird zum Grossteil durch das Absaugerohr 12 ausgetragen. Der seitlich des Absaugerohres 12 nach unten auf dem Boden 14 sich absetzende Holzstaub kann durch Herunterklappen des beweglich gelagerten Bodens (Fig. 3) entfernt werden.

Der horizontale Abstand "a" der Abschlusswand 9 von dem Stützrost 2 ist vorzugsweise so gewählt, dass der vom rotierenden Sägeblatt abgeschleuderte Sägestaub von der Abschlusswand entweder überhaupt nicht, oder nur in unwesentlichem Ausmasse zurückgeschleudert wird, so dass der Sägestaub nach seinem Eintritt in die Absaugekammer 11 nicht mehr in die Stützrostschlitze Z gelangen kann.

Der Stützrost 2 kann beispielsweise aus einer homogenen Platte herausgearbeitet sein, die an ihrer dem Werkstück W (Fig. 3) abgewandten Seite vertikale Nuten N aufweist, während von der Plattenvorderseite her Schlitze Z eingearbeitet sind, die im Bereich der Nuten N durchgängig, das heisst, nach dem Absaugeraum hin offen sind. Die zwischen den Nuten N stehengelassenen Stege 18 verbinden die durch die Schlitze Z getrennten Leisten zu einer starren Einheit.

Bei dieser zuletzt beschriebenen Ausführungsform des Stützrostes kann der Eintritt des vom rotierenden Sägeblatt abgeschleuderten Holzstaubes in den Absaugeraum noch dadurch verbessert werden, dass die eine der Seitenkanten jedes Steges 18 unter einem Winkel α abgeschrägt ist (Fig. 3 und 4).

Gemäss einer Variante kann der Stützrost auch eine mit horizontal verlaufenden Schlitzen Z versehene Frontplatte aufweisen, deren durch die Schlitze voneinander getrennte Horizontalleisten durch auf der Rückseite in gegenseitigen Abständen befestigte, vorzugsweise aufgeklebte und quer zu den Horizontalleisten verlaufende Verbindungsleisten zusammengehalten sind.

Die geringe, in etwa der Sägeblattdicke c entsprechende Höhe b der Stützrostschlitze Z dient übrigens nicht nur zur Begrenzung der Holzstaub-Rückströmung, sondern trägt auch zur Unfallverhütung bei, da nun mit Sicherheit niemand mehr mit dem Finger in bzw. hinter einen der Schlitze Z gelangen kann.

Durch die bisher beschriebene Einrichtung ist gewährleistet, dass der beim Horizontalschnitt beidseits des Werkstücks anfallende Sägestaub wirkungsvoll bis auf vernachlässigbare Restmengen abgesaugt werden kann. Sobald das Sägeblatt allerdings gegen Ende des Sägevorganges am rechten Werkstückrand zum Auslauf kommt, könnte dennoch ein unkontrollierter frontaler Sägestaubaustritt erfolgen. Um dies zu verhindern, ist am rechten Gestellrand ein Abfangelement 20 angeordnet, das sich über die Gesamthöhe des Gestells erstreckt und vom rechten Gestellrand unter einem spitzen Winkel schräg nach aussen ragt. Das Abfangelement 20 kann als starre Platte oder beispielsweise in Form eines biegsamen Balges ausgebildet sein, so dass es sich bei Bedarf bis an den Randbereich des in Bearbeitung befindlichen Werkstückes heranziehen lässt.

## Patentansprüche

1. Vertikale Plattensäge zur Anbringung von Horizontal- und Vertikalschnitten an insbesondere grossflächigen Platten aus Holz, Kunststoff und deren Verbundmaterialien, mit einem mindestens annähernd vertikalen Gestell (1), einem an diesem, auf dessen Arbeitsseite befestigten Stützrost (2) mit einer Vielzahl paralleler, in gegenseitigem gleichem Abstand vorgesehener Zwischenräume (Z) zur Aufnahme des beim Horizontalschnitt das Werkstück überragenden Sägeblattrandes, einem das um 90° kippbare, vertikal verschiebbare Sägeaggregat (4) tragenden, längs des Gestells (1) verfahrbaren Sägebalken (3), sowie mit einer sich praktisch über die gesamte Plattensäge erstreckenden Abschlusswand (9) zur Abgrenzung des hinter dem Werkstück (W) anfallenden Sägestaubs, wobei der Stützrost (2) beweglich gelagert und mit der jeweiligen Höhenlage des in Horizontalschnittposition befindlichen Sägeaggregats (4) so gekoppelt ist, dass der Horizontalschnitt unabhängig vom gewählten Mass in einem der genannten Zwischenräume (Z) erfolgt, dadurch gekennzeichnet, dass die Zwischenräume (Z) als Schlitze ausgebildet sind, deren Höhe (b) im wesentlichen der Sägeblattdicke (c) entspricht, und dass die Abschlusswand (9) mit horizontalem Abstand vom Stützrost derart auf der dem Stützrost (2) abgewandten Seite des Gestells (1) angeordnet und am Gestell befestigt ist, dass in einem zusammenhängenden Raum der beim Horizontalschnitt anfallende Sägestaub hinter dem Werkstück in den zwischen dem Stützrost (2) und der Abschlusswand (9) gebildeten, unter einem Unterdruck stehenden Absaugraum (11) gelangt und dort durch die kombinierte Wirkung von Schwerkraft und Absaugung nach unten entfernt werden kann.

2. Vertikale Plattensäge nach Anspruch 1, dadurch gekennzeichnet, dass der horizontale Abstand (a) der Abschlusswand von dem Stützrost (2) so gewählt ist, dass der vom rotierenden Sägeblatt (S) abgeschleuderte Sägestaub von der Abschlusswand (9) nicht, oder nur in unwesentlichem Ausmasse, zurückprallt.

3. Vertikale Plattensäge nach Anspruch 1 oder 2, dadurch gekennzeichnet, dass der Stützrost (2) als homogene Platte ausgebildet ist, deren horizontale Schlitze (Z) sich von der Plattenfrontseite bis zu einer Tiefe (d) erstrecken, die kleiner als die Gesamtdicke (D) der Platte ist, und dass, von der Plattenrückseite ausgehend, quer zu den genannten Schlitzen (Z) verlaufende Nuten (N) in gegenseitigen Abständen angebracht sind, deren Tiefe mindestens der Differenz (D-d) zwischen der Platten-Gesamtdicke (D) und der Schlitztiefe (d) entspricht, derart, dass der beim Horizontalschnitt vom Sägeblatt (S) abgeschleuderte Staub durch einen der Schlitze (Z) und die Nuten (N) der Platte in den Absaugeraum (11) gelangt.

4. Vertikale Plattensäge nach Anspruch 1 oder 2, dadurch gekennzeichnet, dass der Stützrost (2) eine mit horizontal verlaufenden Schlitzen versehene Frontplatte aufweist, deren durch die Schlitze voneinander getrennte Horizontalleisten durch auf deren Rückseiten in gegenseitigen Abständen befestigte, vorzugsweise aufgeklebte, und quer zu den Horizontalleisten verlaufende Verbindungsleisten zusammen gehalten sind.

5. Vertikale Plattensäge nach einem der Ansprüche 1 bis 4, dadurch gekennzeichnet, dass im unteren Bereich der genannten Absaugekammer (11) ein auf seiner Gesamtlänge mit Eintrittsöffnungen (13) versehenes, an eine Vakuumquelle angeschlossenes Absaugerohr (12) angeordnet und der unterhalb des Absaugerohrs (12) befindliche, die Absaugekammer (11) nach unten abschliessende Boden (14) zwecks Austragung des sich nach unten absetzenden Sägestaubs nach unten aufklappbar ist.

6. Vertikale Plattensäge nach einem der Ansprüche 1 bis 5, dadurch gekennzeichnet, dass das Gestell (1) in seinem dem jeweiligen Auslauf des Horizontalschnitts entsprechenden Randbereich ein sich mindestens über einen Grossteil seiner Gesamthöhe erstreckendes, von der Frontfläche des Gestells schräg nach aussen ragendes Abfangelement (20) für den kurz vor Fertigstellung des Horizontalschnitts nach vorne austretenden Sägestaub aufweist.

## Claims

1. Vertical panel saw for making horizontal and vertical cuts in, in particular, large-surface-area panels made of wood, plastic and the composite materials thereof, having an at least approximately vertical framework (1), having a supporting grid (2) which is fastened on the framework, on the operating side of the latter, and has a multiplicity of parallel interspaces (Z) which are spaced apart at regular intervals from one another and are intended for receiving the saw-blade border which projects beyond the workpiece during horizontal cutting, having a saw bar (3) which can be displaced along the framework (1) and bears the saw unit (4), which can be tilted through 90° and is vertically displaceable, and having a termination wall (9) which extends virtually over the entire panel saw and is intended for confining the sawdust which accumulates behind the workpiece (W), it being the case that the supporting grid (2) is mounted in a movable manner and is linked with the respective vertical position of the saw unit (4) when in the horizontal cutting position, such that, irrespective of the selected dimension, horizontal cutting takes place in one of said interspaces (Z), characterized in that the interspaces (Z) are designed as slits whose height (b) corresponds essentially to the saw-blade thickness (c), and in that the termination wall (9) is arranged, at a horizontal distance from the supporting grid, on that side of the framework (1) which is directed away from said supporting grid (2), and is fastened on the framework, such that, in a continuous space, the sawdust which accumulates during horizontal cutting passes, behind the workpiece, into the suction chamber (11), which is formed between the supporting grid (2) and the termination wall (9) and is subjected to negative pressure, and, in said chamber, can be removed downwards by the combined action of gravitational force and suction.

2. Vertical panel saw according to Claim 1, characterized in that the horizontal distance (a) of the termination wall from the supporting grid (2) is selected such that the sawdust which is thrown off from the rotating saw blade (S) rebounds from the termination wall (9) only to a slight extent, if at all.

3. Vertical panel saw according to Claim 1 or 2, characterized in that the supporting grid (2) is designed as a homogeneous panel whose horizontal slits (Z) extend from the front side of the panel to a depth (d) which is smaller than the overall thickness (D) of the panel, and in that, starting from the rear side of the panel, grooves (N) which run transversely with respect to said slits (Z) are provided at intervals from one another, and their depth corresponds at least to the difference (D-d) between the overall panel thickness (D) and the slit depth (d), such that the dust which is thrown off from the saw blade (S) during horizontal cutting passes into the suction chamber (11) through one of the slits (Z) and the grooves (N) of the panel.

4. Vertical panel saw according to Claim 1 or 2, characterized in that the supporting grid (2) has a front panel which is provided with horizontally running slits and whose horizontal strips, which are separated from one another by the slits, are held together by connecting strips which are fastened, preferably adhesively bonded, at intervals from one another on the rear sides of said horizontal strips and run transversely with respect to the latter.

5. Vertical panel saw according to one of Claims 1 to 4, characterized in that arranged in the bottom region of said suction chamber (11) is a suction tube (12), which is provided over its entire length with inlet openings (13) and is connected to a vacuum source, and the base (14), which is located beneath the suction tube (12) and terminates the suction chamber (11) at the bottom, can be swung open downwards for the purpose of discharging the sawdust which settles in the downward direction.

6. Vertical panel saw according to one of Claims 1 to 5, characterized in that, in its border region which corresponds to the respective exit point of the horizontal cut, the framework (1) has an intercepting element (20) which extends at least over a large part of the overall height of the framework, projects obliquely outwards from the front surface of said framework and is intended for the sawdust which escapes in the forward direction shortly prior to completion of the horizontal cut.

## Revendications

1. Scie verticale pour panneaux pour l'exécution de coupes horizontales et verticales dans des panneaux, notamment de surface étendue, en bois, en matière plastique et en matériau composite formés à partir de tels matériaux, comportant une monture au moins approximativement verticale (1), une grille de support (2) fixée à cette monture, sur la face de travail de cette dernière, comportant une multiplicité d'espaces intercalaires parallèles (Z) prévus à des distances réciproques identiques et servant à recevoir le bord de la lame de scie, qui fait saillie par rapport à la pièce à traiter dans le cas d'une coupe horizontale, une barre (3) de support de scie, qui porte le module de scie (4) pouvant basculer sur 90° et étant déplaçable verticalement, et est déplaçable le long de la monture (1), ainsi qu'une paroi formant écran (9) qui s'étend pratiquement sur toute la scie pour panneaux, pour arrêter la sciure qui est produite en arrière de la pièce à traiter (W), et dans laquelle la grille de support (2) est montée de manière à être déplaçable et est couplée à la position respective en hauteur du module de scie (4) situé dans la position de coupe horizontale de telle sorte que la coupe horizontale est réalisée indépendamment de la cote choisie dans l'un desdits espaces intercalaires (Z), caractérisée en ce que les espaces intercalaires (Z) sont agencés sous la forme de fentes, dont la hauteur (b) correspond essentiellement à l'épaisseur (c) de la lame de scie, et que la paroi formant écran (9) est disposée, à une certaine distance horizontale de la grille de support, sur le côté de la monture (1) tourné à l'opposé de la grille de support (2), et est fixée sur la monture de telle sorte que dans un espace contigu, la sciure, qui apparaît lors de l'exécution de la coupe horizontale, parvient en arrière de la pièce à traiter dans l'espace d'aspiration (11) qui est formé entre la grille de support (2) et la paroi formant écran (9) et est placé en dépression, et peut être évacuée en cet endroit, vers le bas, sous l'action combinée de la force de pesanteur et de l'aspiration.

2. Scie verticale pour panneaux selon la revendication 1, caractérisée en ce que la distance horizontale (a) entre la paroi formant écran et la grille de support (2) est choisie de telle sorte que la sciure, qui est projetée par la lame de scie tournante (S), ne rebondit pas sur la paroi formant écran (9) ou seulement à un degré insignifiant.

3. Scie verticale pour panneaux selon la revendication 1 ou 2, caractérisée en ce que la grille de support (2) est agencée sous la forme d'une plaque homogène dont les fentes horizontales (Z) s'étendent à partir de la face avant de la plaque jusqu'à une profondeur (d) qui est inférieure à l'épaisseur totale (D) de la plaque et qu'à partir de la face arrière de la plaque sont disposées des rainures (N) qui s'étendent transversalement par rapport auxdites fentes (Z) en étant situées à des distances réciproques et dont la profondeur correspond au moins à la différence (D-d) entre l'épaisseur totale (D) de la plaque et la profondeur (d) de la fente de sorte que la poussière, qui est projetée par la lame de scie (S) lors de l'exécution de la coupe horizontale, parvient en traversant l'une des fentes (Z) et les rainures (N) de la plaque dans l'espace d'aspiration (11).

4. Scie verticale pour panneaux selon la revendication 1 ou 2, caractérisée en ce que la grille de support (2) possède une plaque avant pourvue de fentes horizontales, dont les barrettes horizontales, qui sont séparées les unes des autres par les fentes, sont retenues par des barrettes de liaison, qui sont fixées sur les faces arrière à des distances réciproques, de préférence par collage, et s'étendent transversalement par rapport aux barrettes horizontales.

5. Scie verticale pour panneaux selon l'une des revendications 1 à 4, caractérisée en ce que dans la partie inférieure de ladite chambre d'aspiration (11) est disposé un tube d'aspiration (12), qui est pourvu d'ouvertures d'entrée (13) sur toute sa longueur et est raccordé à une source de dépression, et que le fond (14), qui est situé au-dessous du tube d'aspiration (12) et ferme vers le bas la chambre d'aspiration (11), peut être rabattu vers le bas pour l'évacuation de la sciure qui s'accumule vers le bas.

6. Scie verticale pour panneaux selon l'une des revendications 1 à 5, caractérisée en ce que la monture (1) possède, dans sa partie marginale correspondant à la fin de la coupe horizontale, un élément de collecte (20) qui s'étend au moins sur une grande partie de la hauteur totale de la monture et fait saillie extérieurement en position oblique à partir de la face avant de la monture, pour collecter la sciure qui sort vers l'avant peu avant l'achèvement de la coupe horizontale.
